# EUROPÄISCHE PATENTSCHRIFT

(11) **EP 4 194 750 B1**
(45) Veröffentlichungstag und Bekanntmachung des Hinweises auf die Patenterteilung: **31.01.2024**
(21) Anmeldenummer: 21213748.3
(22) Anmeldetag: 10.12.2021
(51) Int. Cl.: F23D 14/12, F23C 3/00, F23C 9/08

(54) **DUNKELSTRAHLER**
DARK RADIATOR
ÉMETTEUR SOMBRE

(43) Veröffentlichungstag der Anmeldung: 14.06.2023
(73) Patentinhaber: Schwank GmbH, 50735 Köln (DE)
(72) Erfinder: Kreis, Edgar, 63579 Freigericht (DE); Genzel, Alexander, 53179 Bonn (DE); Stohler, Torsten, 40822 Mettmann (DE); Renner, Thomas, 50389 Wesseling (DE)
(74) Vertreter: Patentanwälte Dörner & Kötter PartG mbB

(56) Entgegenhaltungen:
- DE-B- 1 064 671
- DE-U1- 9 207 435
- JP-A- S62 123 220
- US-A1- 2004 115 575
- US-A1- 2005 247 300

## Beschreibung

Die Erfindung betrifft einen Dunkelstrahler, mit einem Brenner, einem Gebläse und einem Strahlrohr, wobei der Brenner mit einer Brenngaszuführung verbunden ist, wobei das Gebläse dazu eingerichtet ist, dem Brenner Verbrennungsluft zuzuführen, wobei der Brenner eingerichtet ist, eine Flamme in das Strahlrohr abzugeben.

Im gewerblichen und industriellen Bereich werden zur Beheizung von Produktions- und Lagerstätten häufig Dunkelstrahler eingesetzt. Dunkelstrahler weisen als Strahlungselemente ein oder mehrere Strahlungsrohre auf, welchen mindestens ein Brenner zugeordnet ist. Durch Verbrennung eines Gemisches aus Brenngas und Luft innerhalb des Brenners wird eine Flamme erzeugt, welche mithilfe eines Gebläses über die gesamte Länge des Strahlungsrohres verteilt werden kann. Die Strahlrohre sind regelmäßig durchgängig im Nachgang an den Brenner linear oder U-förmig angeschlossen und sollen die durch die Flamme erzeugte Wärme gleichmäßig über den gesamten Rohrverlauf abstrahlen. Das Strahlungsrohr wird durch die Flamme gleichmäßig erhitzt und generiert eine Wärmestrahlung, die auf einen zu erwärmenden Bereich abgestrahlt wird. Zur Erhöhung des Wirkungsgrades kommen hierbei häufig Reflektoren zum Einsatz. Die durch die Verbrennung entstehenden Abgase werden mithilfe des Gebläses aus dem Strahlungsrohr entfernt, beispielsweise über Abgasrohre an die Außenluft abgeführt.

Als Brenngas dient Erdgas oder Flüssiggas (Propangas oder Biogas), das in einer Mischkammer in einem vorgegebenen Verhältnis mit Verbrennungsluft gemischt wird, wonach es durch eine mit Durchtrittskanälen versehene Brennerplatte in die Brennkammer eingeleitet und gezündet wird. Die Brennerplatte, die regelmäßig als Keramikplatte ausgebildet ist, dient als Flammenrückschlagsperre und hat zugleich die Aufgabe, die Flamme zu halten. Alternativ werden als Flammenrückschlagsperre und Flammenhalter auch Gitter oder Drahtgeflechte eingesetzt durch die das Brennstoff-Luftgemisch geführt wird. Ein solcher Dunkelstrahler ist beispielsweise in der EP 2 014 980 A1 und der EP 2 708 814 A1 beschrieben.

Die Brenner der vorbekannten Dunkelstrahler gestalten sich zunehmend aufwändig. Dies nicht zuletzt auch vor dem Hintergrund des ständigen Bestrebens ein optimales stöchiometrisches Verhältnis zwischen Brenngas und Luft zu erreichen, um eine möglichst vollständige Verbrennung zu erzielen, um die Schadstoffemission zu minimieren.

Ein gattungsgemäßer Dunkelstrahler ist aus DE 1 064 671 B bekannt.

Hier setzt die vorliegende Erfindung an. Der Erfindung liegt die Aufgabe zugrunde, einen Dunkelstrahler bereitzustellen, der einfach aufgebaut und kostengünstig herstellbar ist. Gemäß der Erfindung wird diese Aufgabe durch die Merkmale des kennzeichnenden Teils des Patentanspruchs 1 gelöst.

Mit der Erfindung ist ein Dunkelstrahler bereitgestellt, der einfach aufgebaut und kostengünstig herstellbar ist. Dadurch, dass die Brenngaszuführung mit einer Wasserstoffquelle als Brenngasquelle verbunden ist und eine Gasdüse aufweist, wobei beabstandet zur Gasdüse ohne das Vorhandensein eines Flammhalters eine Zündeinrichtung angeordnet ist, ist ein einfacher Aufbau mit reduzierter Bauteilanzahl erzielt. Überraschend hat sich gezeigt, dass durch den Einsatz von Wasserstoff als Brenngas eine Vormischung mit Verbrennungsluft nicht erforderlich ist. Dadurch, dass der aus der Düse unter Druck austretende Wasserstoffstrom aufgrund seiner Reaktionsfreudigkeit nach Kontakt mit vor der Düse befindlicher Verbrennungsluft bei Erreichen des erforderlichen Mischungsverhältnisses zündet, bildet sich in hinreichendem Abstand zur Düse, eine stabile Flamme aus, die sich selbst erhält, ohne dass die Gefahr eines Flammenrückschlags in die Düse besteht. Der im Stand der Technik eingesetzte Flammhalter, der dort zugleich die Funktion einer Rückschlagsicherung hat, ist nicht erforderlich. Zudem ist die eine reduzierte Schadstoffemission bewirkt. Da Wasserstoff keinen Kohlenstoff enthält, sind in dem Abgas theoretisch keine kohlenstoffhaltigen Schadstoffe wie Kohlenstoffmonoxid, Kohlenstoffdioxid oder Kohlenwasserstoffe enthalten.

In Weiterbildung der Erfindung ist das Gebläse derart angeordnet, dass das Strahlrohr zumindest in Flammrichtung hinter der Gasdüse mit Verbrennungsluft geflutet wird. Hierdurch ist eine hinreichende Versorgung des Bereichs vor der Düse mit Verbrennungsluft gewährleistet, die durch ihre Strömung eine Vermischung mit dem aus der Düse austretenden Wasserstoff unterstützt. Bevorzugt ist das Gebläse derart angeordnet, dass die Gasdüse mit Verbrennungsluft umspült wird.

In Ausgestaltung der Erfindung ist das Gebläse saugseitig mit einer mit dem Strahlrohr verbundenen Abgasleitung verbunden. Hierdurch ist eine Rückführung eines Teils des Verbrennungsabgases zur Verbrennungsluft ermöglicht, wodurch die Flammtemperatur einstellbar ist, wodurch der Emission von Stickoxiden entgegengewirkt ist.

In weiterer Ausgestaltung der Erfindung ist das Gebläse saugseitig mit einem Ejektor verbunden, dessen Sauganschluss mit der Abgasleitung verbunden ist, wobei durch das Gebläse angesaugte Verbrennungsluft als Treibmedium dient, sodass dem Brenner durch das Gebläse ein Abgas-Verbrennungsluftgemisch zugeführt wird. Hierdurch ist eine Zuführung eines definierten Abgasstroms zum Verbrennungsluftstrom mit nachfolgender Vermischung durch das Gebläse erzielt.

In Weiterbildung der Erfindung ist der Ejektor oder die Abgasleitung mit einer Verstelleinrichtung versehen, über die das Mischungsverhältnis von Abgasstrom und Verbrennungsluftstrom einstellbar ist. Hierdurch ist eine fortlaufende Einstellung der Flammtemperatur ermöglicht.

In Ausgestaltung der Erfindung ein optischer Sensor angeordnet ist, der eingerichtet ist, wenigstens einen Flammenparameter der Flamme zu detektieren. Bevorzugt ist der optische Sensor ein UV-Sensor. Überraschend hat sich gezeigt, dass sich Eigenschaften der unsichtbaren Flamme einer Wasserstoffverbrennung durch optische Sensoren zuverlässig ermitteln lassen, wobei durch einen UV-Sensor neben der Flammtemperatur auch weitere Parameter detektierbar sind. Vorteilhaft ist der optische Sensor auf den Flammengrund der Flamme ausgerichtet.

In weiterer Ausgestaltung der Erfindung ist der UV-Sensor zur UV-Resonanz-Absorptionsspektroskopie eingerichtet. Hierdurch ist eine Detektierung des NOX-Gehaltes der Flamme und des diese umgebenden Verbrennungsabgases ermöglicht. Vorteilhaft ist der Sensor über ein Regelungsmodul mit der Verstelleinrichtung zur Einstellung des Mischungsverhältnisses von Abgasstrom und Verbrennungsluftstrom verbunden. Hierdurch ist eine Temperaturregelung der Flamme über eine Steuerung dieses Mischungsverhältnisses über eine NOX-Sollwertvorgabe ermöglicht.

In Weiterbildung der Erfindung ist der optische Sensor mit einer mit der Brenngaszuführung verbundenen Stelleinrichtung zur Unterbrechung und/oder zur Einstellung der Wasserstoffzufuhr verbunden. Hierdurch ist einem Entweichen von Wasserstoff bei Erlöschen der Flamme entgegengewirkt.

In Ausgestaltung der Erfindung ist die Stelleinrichtung mit einem Steuer- und Regelmodul verbunden ist, das eingerichtet ist, die Flammeigenschaften anhand hinterlegter Sollparameter durch Veränderung der Wasserstoff- und/oder Verbrennungsluftmengen einzuregeln. So kann beispielsweise ein als zur UV-Resonanz-Absorptionsspektroskopie eingerichteter UV-Sensor ausgeführter optische Sensor über das Steuer- und Regelungsmodul mit der Verstelleinrichtung zur Einstellung des Mischungsverhältnisses von Abgasstrom und Verbrennungsluftstrom verbunden sein, wodurch eine Temperaturregelung der Flamme über eine Steuerung dieses Mischungsverhältnisses über eine NOX-Sollwertvorgabe ermöglicht ist.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschreiben. Es zeigen:
- Figur 1: die schematische Darstellung eines Dunkelstrahlers;
- Figur 2: die schematische Darstellung eines Dunkelstrahlers in einer weiteren Ausführungsform und
- Figur 3: die schematische Darstellung eines Dunkelstrahlers in einer dritten Ausführungsform.

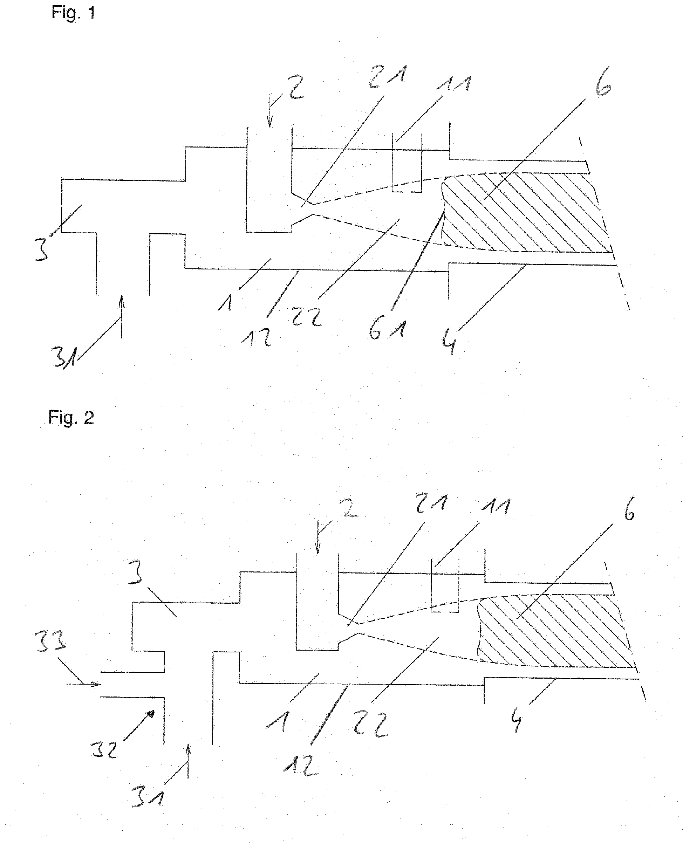

Der als Ausführungsbeispiel gewählte Dunkelstrahler gemäß Figur 1 umfasst einen Brenner 1, der mit einem Gebläse 3 verbunden ist und an den sich ein Strahlrohr 4 anschließt. Das Strahlrohr 4 ist in Figur 1 lediglich angedeutet; das Strahlrohr 4 kann sich durchaus über einige Meter Länge erstrecken und aus mehreren Strahlrohrelementen gebildet sein. Im Ausführungsbeispiel ist das Strahlrohr 4 als hochhitzebeständiges Edelstahlrohr ausgebildet. Alternativ können auch Sonderstähle mit einer thermisch aufgebrachten Aluminiumoxidschicht zum Einsatz kommen. Das Strahlrohr 4 ist im Ausführungsbeispiel von einem - nicht dargestellten - Reflektor eingefasst, der im Ausführungsbeispiel aus oberflächenstrukturiertem Aluminiumblech ausgebildet ist und der auf beiden Seiten Schottbleche zur Reduktion konvektiver Verluste aufweist.

Der Brenner 1 umfasst eine Gasdüse 21, die mit einer Wasserstoffzuführung 2 verbunden ist. Beabstandet zu der Gasdüse 21 ist in dem Brenner 1 eine Zündelektrode 11 angeordnet. An seinem der Zündelektrode 11 abgewandten Seite des Brenners 1 ist das Gebläse 3 derart angestellt, dass es die Gasdüse 21 mit Verbrennungsluft umspült. Hierzu ist das Gebläse saugseitig mit einer Verbrennungsluftzuführung 31 verbunden.

Der aus der Gasdüse 21 in den Brenner 1 unter Druck austretende Wasserstoffstrom vermischt sich mit dem Verbrennungsluftstrom, der die Gasdüse 21 umspült und wird bei Erreichen des erforderlichen Mischungsverhältnisses durch die beabstandet zu der Gasdüse 21 angeordnete Zündelektrode 11 entzündet, wodurch in T einem Abstand zur Gasdüse 21 eine Flamme 6 gebildet ist, die sich über die Länge des Strahlrohrs 4 in dieses erstreckt. In dem nicht zündfähigen Bereich 22 des Wasserstoffstroms, der kein ausreichendes Mischungsverhältnis mit Verbrennungsluft aufweist, ergibt sich keine Flammbildung.

Im Ausführungsbeispiel gemäß Figur 2 ist das Gebläse 3 an seiner Saugseite mit einem Ejektor 32 verbunden, dessen Treibanschluss mit einer Verbrennungsluftzuführung 31 und dessen Sauganschluss mit einer Abgaszuführung 33 verbunden ist. Die Abgaszuführung ist von einer - nicht dargestellten - Abgasleitung gespeist, die abgasseitig mit dem Strahlrohr 4 verbunden ist. Die durch das Gebläse 3 angesaugte Verbrennungsluft dient hier als Treibmedium, durch das eine Ansaugung des Abgases bewirkt ist. Druckseitig wird die Gasdüse 21 durch das Gebläse 3 hierdurch ein Abgas-Verbrennungsluft-Gemisch zugeführt, die Gasdüse 21 umspült. Das Abgas-Verbrennungsluft-Gemisch weist einen reduzierten Sauerstoffgehalt auf, wodurch eine Flamme mit reduzierter Temperatur bewirkt ist. Aufgrund der hohen Reaktionsfreudigkeit von Wasserstoff reicht auch ein geringer Sauerstoffgehalt in dem Abgas-Verbrennungsluft-Gemisch zur Zündung aus, wodurch eine sich durch das Strahlrohr 4 erstreckende Flamme 6 erzeugt wird.

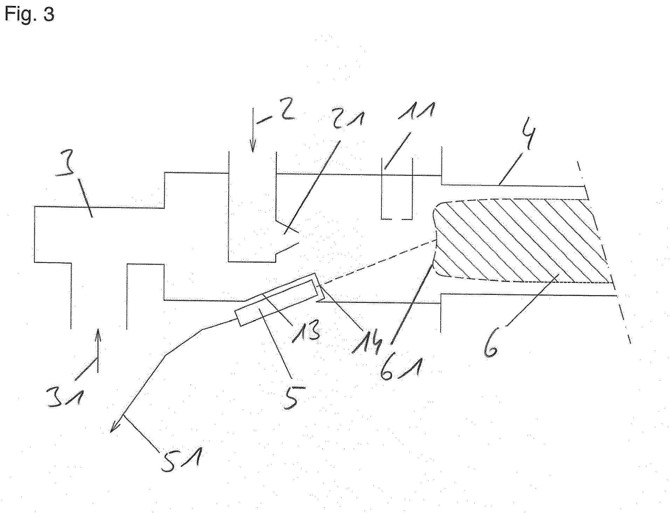

Im Ausführungsbeispiel gemäß Figur 3 ist in dem Gehäuse 12 des Brenners 1 eine Sensoraufnahme 13 eingebracht, die ein Fenster 14 aufweist. In die Sensoraufnahme 13 ist ein UV-Sensor 5 eingebracht, der über eine elektrische Leitung 51 mit einer - nicht dargestellten Stelleinrichtung zur Unterbrechung der Wasserstoffzuführung 2 verbunden ist. Der UV-Sensor 5 ist im Ausführungsbeispiel mittig auf den Flammengrund 61 der Flamme 6 gerichtet. Wird durch den UV-Sensor 5 keine Flamme 6 detektiert, so wird die Wasserstoffzufuhr durch die Stelleinrichtung unterbrochen. Die Stelleinrichtung oder ein mit dieser verbundenes Steuer- und Regelmodul kann auch zusätzlich mit der Zündelektrode 11 verbunden und derart eingerichtet sein, dass in dem Fall, dass keine Flamme detektiert wird, zunächst die Zündelektrode 13 aktiviert wird und erst nach weiterem Ausbleiben einer Flamme eine Unterbrechung der Wasserstoffzufuhr erfolgt.

Ist das Gebläse 3 entsprechend dem Ausführungsbeispiel gemäß Figur 2 saugseitig mit einem Ejektor verbunden, über den eine Zumischung eines Abgasstroms zum Verbrennungsluftstrom erfolgt, so kann der Ejektor oder die diesen saugseitig speisende Abgaszuführungsleitung mit einer Verstelleinrichtung versehen sein, über die das Mischungsverhältnis von Abgasstrom und Verbrennungsluftstrom einstellbar ist. Ist der UV-Sensor zur UV-Resonanz-Absorptionsspektroskopie eingerichtet, so ist eine Regelung der Flammtemperatur auf Basis eines von dem UV-Sensor detektierten NOX-Gehaltes möglich. Hierzu ist der Sensor zweckmäßigerweise mit einem Regelmodul verbunden, dessen Sollgröße ein vorgegebener Soll-NOX-Wert ist, wobei der Ist-NOX-Wert von dem UV-Sensor geliefert wird. Auf Basis der Differenz zwischen Soll- und Istwert kann über die Ansteuerung der Verstelleinrichtung eine Verstellung des Mischungsverhältnisses von Abgasstrom und Verbrennungsluftstrom erfolgen, wodurch eine Veränderung der Temperatur der Flamme 6 bewirkt ist, was wiederum eine Änderung des NOX-Istwertes bewirkt.

## Patentansprüche

1. Dunkelstrahler, mit einem Brenner (1), einer Brenngaszuführung (2), einer Brenngasquelle, einer Zündeinrichtung (11), einem Gebläse (3) und einem Strahlrohr (4), wobei die Brenngasquelle eine Wasserstoffquelle ist, die Brenngaszuführung (2) mit der Brenngasquelle verbunden ist, und der Brenner (1) mit der Brenngaszuführung verbunden ist, wobei das Gebläse (3) dazu eingerichtet ist, dem Brenner (1) Verbrennungsluft zuzuführen, wobei der Brenner (1) eingerichtet ist, eine Flamme (6) in das Strahlrohr (4) abzugeben, **dadurch gekennzeichnet, dass** die Brenngaszuführung (2) eine Gasdüse (21) aufweist, und dass die Zündeinrichtung (11) beabstandet zur Gasdüse (21) ohne das Vorhandensein eines Flammhalters angeordnet ist.

2. Dunkelstrahler nach Anspruch 1, **dadurch gekennzeichnet, dass** das Gebläse (3) derart angeordnet ist, dass das Strahlrohr (4) zumindest in Flammrichtung hinter der Gasdüse (21) mit Verbrennungsluft geflutet wird.

3. Dunkelstrahler nach Anspruch 2, **dadurch gekennzeichnet, dass** das Gebläse (3) derart angeordnet ist, dass die Gasdüse (21) mit Verbrennungsluft umspült wird.

4. Dunkelstrahler nach einem der vorgenannten Ansprüche, **dadurch gekennzeichnet, dass** das Gebläse (3) saugseitig mit einer mit dem Strahlrohr (4) verbundenen Abgasleitung verbunden ist.

5. Dunkelstrahler nach Anspruch 4, **dadurch gekennzeichnet, dass** das Gebläse (3) saugseitig mit einem Ejektor (32) verbunden ist, dessen Sauganschluss mit der Abgasleitung verbunden ist, wobei durch das Gebläse (3) angesaugte Verbrennungsluft als Treibmedium dient, sodass dem Brenner (1) durch das Gebläse (3) ein Abgas-Verbrennungsluftgemisch zugeführt wird.

6. Dunkelstrahler nach Anspruch 4 oder 5, **dadurch gekennzeichnet, dass** der Ejektor (32) oder die Abgasleitung mit einer Verstelleinrichtung versehen ist, über die das Mischungsverhältnis von Abgasstrom und Verbrennungsluftstrom einstellbar ist.

7. Dunkelstrahler nach einem der vorgenannten Ansprüche, **dadurch gekennzeichnet, dass** ein optischer Sensor angeordnet ist, der eingerichtet ist, wenigstens einen Flammenparameter der Flamme 6 zu detektieren.

8. Dunkelstrahler nach Anspruch 7, **dadurch gekennzeichnet, dass** der optische Sensor ein UV-Sensor (5) ist.

9. Dunkelstrahler nach Anspruch 7 oder 8, **dadurch gekennzeichnet, dass** der optische Sensor auf den Flammengrund (61) der Flamme (6) ausgerichtet ist.

10. Dunkelstrahler nach einem der Ansprüche 7 bis 9, **dadurch gekennzeichnet, dass** der UV-Sensor (5) zur UV-Resonanz-Absorptionsspektroskopie eingerichtet ist.

11. Dunkelstrahler nach einem der 7 bis 10, **dadurch gekennzeichnet, dass** der optische Sensor mit einer mit der Brenngaszuführung verbundenen Stelleinrichtung zur Unterbrechung und/oder zur Einstellung der Wasserstoffzuführung (2) verbunden ist.

12. Dunkelstrahler nach Anspruch 11, **dadurch gekennzeichnet, dass** die Stelleinrichtung mit einem Steuer- und Regelmodul verbunden ist, das eingerichtet ist, die Flammeigenschaften der Flamme (6) anhand hinterlegter Sollparameter durch Veränderung der Wasserstoff- und/oder Verbrennungsluftmengen einzuregeln.

## Claims

1. Dark radiator having a burner (1), a fuel gas supply (2), a fuel gas source, an ignition device (11), a fan (3) and a radiant tube (4), wherein the fuel gas source is a hydrogen source, the fuel gas supply (2) is connected to the fuel gas source and the burner (1) is connected to the fuel gas supply, wherein the fan (3) is adapted to supply the burner (1) with combustion air, wherein the burner (1) is adapted to emit a flame (6) into the radiant tube (4), **characterised in that** the fuel gas supply (2) has a gas nozzle (21) and **in that** the ignition device (11) is arranged at a distance from the gas nozzle (21) without a flame holder being present.

2. Dark radiator according to claim 1, **characterised in that** the fan (3) is arranged in such a manner that the radiant tube (4) is flooded with combustion air at least in the flame direction behind the gas nozzle (21).

3. Dark radiator according to claim 2, **characterised in that** the fan (3) is arranged in such a manner that combustion air is flushed around the gas nozzle (21).

4. Dark radiator according to one of the previous claims, **characterised in that** the fan (3) is connected on the suction side to an exhaust gas line connected to the radiant tube (4).

5. Dark radiator according to claim 4, **characterised in that** the fan (3) is connected on the suction side to an ejector (32), the suction connection of which is connected to the exhaust gas line, wherein combustion air sucked in by the fan (3) serves as a motive medium, so that the burner (1) is supplied with an exhaust gas-combustion air mixture by the fan (3).

6. Dark radiator according to claim 4 or 5, **characterised in that** the ejector (32) or the exhaust gas line is provided with an adjusting device, via which the mixing ratio of exhaust gas flow and combustion air flow is adjustable.

7. Dark radiator according to one of the previous claims, **characterised in that** an optical sensor is arranged, which is adapted to detect at least one flame parameter of the flame 6.

8. Dark radiator according to claim 7, **characterised in that** the optical sensor is a UV sensor (5).

9. Dark radiator according to claim 7 or 8, **characterised in that** the optical sensor is directed towards the flame base (61) of the flame (6).

10. Dark radiator according to one of claims 7 to 9, **characterised in that** the UV sensor (5) is set up for UV resonance absorption spectroscopy.

11. Dark radiator according to one of claims 7 to 10, **characterised in that** the optical sensor is connected to an adjusting device connected to the fuel gas supply for interrupting and/or adjusting the hydrogen supply (2).

12. Dark radiator according to claim 11, **characterised in that** the adjusting device is connected to a control and regulating module, which is adapted to adjust the flame properties of the flame (6) on the basis of stored target parameters by changing the hydrogen and/or combustion air quantities.

## Revendications

1. Radiateur obscur, comprenant un brûleur (1), un dispositif d'amenée (2) des gaz de combustion, une source de gaz de combustion, un dispositif d'allumage (11), une soufflerie (3) et un tube radiant (4), sachant que la source de gaz de combustion est une source d'hydrogène, que le dispositif d'amenée (2) des gaz de combustion est relié avec la source de gaz de combustion, et que le brûleur (1) est relié avec le dispositif d'amenée des gaz de combustion, sachant que la soufflerie (3) est configurée pour amener de l'air de combustion au brûleur (1), sachant que le brûleur (1) est configuré pour émettre une flamme (6) dans le tube radiant (4), **caractérisé en ce que** le dispositif d'amenée (2) des gaz de combustion présente une buse à gaz (21), et que le dispositif d'allumage (11) est disposé à distance de la buse à gaz (21) sans qu'il y ait présence d'un stabilisateur de flamme.

2. Radiateur obscur selon la revendication 1, **caractérisé en ce que** la soufflerie (3) est disposée de sorte que le tube radiant (4) soit inondé d'air de combustion au moins en direction de la flamme en aval de la buse à gaz (21).

3. Radiateur obscur selon la revendication 2, **caractérisé en ce que** la soufflerie (3) est disposée de sorte que la buse à gaz (21) soit baignée d'air de combustion.

4. Radiateur obscur selon l'une quelconque des revendications précédentes, **caractérisé en ce que** la soufflerie (3) est reliée, côté aspiration, avec une conduite de gaz brûlés elle-même reliée avec le tube radiant (4).

5. Radiateur obscur selon la revendication 4, **caractérisé en ce que** la soufflerie (3) est reliée, côté aspiration, avec un éjecteur (32) dont le raccord d'aspiration est relié avec la conduite de gaz brûlés, sachant que l'air de combustion aspiré par la soufflerie (3) sert de fluide propulseur, de sorte que la soufflerie (3) amène au brûleur (1) un mélange de gaz brûlés et d'air de combustion.

6. Radiateur obscur selon l'une quelconque des revendications 4 ou 5, **caractérisé en ce que** l'éjecteur (32) ou la conduite de gaz brûlés est muni(e) d'un dispositif d'ajustement via lequel il est possible de régler les proportions du mélange composé de gaz brûlés et d'air de combustion.

7. Radiateur obscur selon l'une quelconque des revendications précédentes, **caractérisé en ce qu'**est disposé un capteur optique configuré pour détecter au moins un paramètre de la flamme (6).

8. Radiateur obscur selon la revendication 7, **caractérisé en ce que** le capteur optique est un capteur d'ultraviolets (5).

9. Radiateur obscur selon l'une quelconque des revendications 7 ou 8, **caractérisé en ce que** le capteur optique est orienté sur la base (61) de la flamme (6).

10. Radiateur obscur selon l'une quelconque des revendications 7 à 9, **caractérisé en ce que** le capteur d'ultraviolets (5) est configuré pour permettre une spectroscopie des UV par absorption et résonance.

11. Radiateur obscur selon l'une des revendications 7 à 10, **caractérisé en ce que** le capteur optique est connecté avec un dispositif d'ajustement lui-même relié avec le dispositif d'amenée des gaz de combustion, pour interrompre et/ou régler l'amenée d'hydrogène (2).

12. Radiateur obscur selon la revendication 11, **caractérisé en ce que** le dispositif d'ajustement est relié avec un module de commande et régulation configuré pour réguler les caractéristiques de la flamme (6) à l'aide de paramètres de consigne enregistrés, en modifiant les quantités d'hydrogène et/ou les quantités d'air de combustion.
